Europäisches Patentamt

European Patent Office

Office européen des brevets

(11) Veröffentlichungsnummer: **0 481 235 A1**

## (12) EUROPÄISCHE PATENTANMELDUNG

(21) Anmeldenummer: **91115890.5**

(22) Anmeldetag: **19.09.91**

(51) Int. Cl.5: **A22C 11/12**

(30) Priorität: **16.10.90 DE 4032750**

(43) Veröffentlichungstag der Anmeldung:
**22.04.92 Patentblatt 92/17**

(84) Benannte Vertragsstaaten:
**CH DE DK ES FR IT LI NL SE**

(71) Anmelder: **Kummerow, Walter, Dipl.-Ing.
Niendorfer Strasse 134 a
W-2400 Lübeck 1(DE)**

(72) Erfinder: **Kummerow, Walter, Dipl.-Ing.
Niendorfer Strasse 134 a
W-2400 Lübeck 1(DE)**

(74) Vertreter: **Vollmann, Heiko, Dipl.-Ing. et al
Patentanwälte Wilcken & Wilcken,
Musterbahn 1
W-2400 Lübeck 1(DE)**

(54) **Verschliesselement.**

(57) Es ist ein Verschließelement (1) beschrieben, welches zum Verschließen eines Schlauches, insbesondere einer Wursthülle (20) geeignet ist, und aus einem ersten (2) und einem zweiten (5) Formstück besteht, die in Verschlußstellung unter Abklemmen eines radial gerafften Bereiches des Schlauches formschlüssig rastend ineinanderfügbar sind. Um einen Verschluß zu erzielen, der rutschfest ist und für sichere Abdichtung sorgt, sind die beiden Formstücke (2,5) so ausgebildet, daß der geraffte Schlauch im Bereich des Verschließelementes in Verschließstellung über seine gesamte Breite mäanderförmig geführt wird. Hierzu weist das eine Formstück (5) mindestens einen Quersteg (12) auf, dem jeweils eine Vertiefung (7) in dem anderen Formstück (2) zugeordnet ist, in die der bzw. die Querstege (12,13) in Verschlußstellung eindringen und dabei den Schlauch mäanderförmig verformen.

FIG. 1

Die Erfindung betrifft ein Verschließelement für einen Schlauch, insbesondere für eine Wursthülle, umfassend ein erstes und ein Zweites Formstück, welche in Verschlußstellung unter Abklemmen eines radial gerafften Bereiches des Schlauchs formschlüssig rastend ineinander fügbar sind.

Behältnisse dieser Art werden in der Praxis auf unterschiedliche Art und Weise verschlossen. So kann der Verschluß durch Abbinden mit einer Schnur oder mittels Metallklammern erfolgen. Letztere sind von u-förmiger Gestalt und werden um eine Einschnürung gelegt und umgebogen. Dazu werden Maschinen eingesetzt, die eine Klammer oder mehrere gleichzeitig in einem Arbeitshub um den Schlauch herumlegen, wobei die erzielte Klemmung für die gewünschte Abdichtung sorgt.

Weiter sind Klemmelemente verschiedener Ausführung aus Kunststoff im Gebrauch, die jeweils Anwendung unter spezifischen Aufgabenstellungen finden. So ist beispielsweise das Verschließelement, von dem die vorliegende Erfindung ausgeht, aus der DE-PS 964 570 bekannt. Bei diesem Verschließelement wird ein radial gerraffter Bereich eines Schlauches in einer mit gegenüberliegenden Randaussparungen versehene Kapsel eingelegt, in die ein Deckel einsetzbar ist, der rastend festgehalten wird. Kapsel und Deckel sind rotationssymmetrisch gestaltet und bilden umlaufende Klemmwülste, in deren Bereich die Schlauchfolie im Verschlußzustand abgeklemmt wird. Dabei erfolgt eine Verformung lediglich der im Zentrum des Verschließelementes verlaufenden Teile der Schlauchfolie, während die Randbereiche lediglich eine Klemmung erfahren.

Alle diese Klemmelemente haben u. a. den Nachteil, daß sie den jeweils unterschiedlichen Abmessungen der zu verschließenden Schlauchfolie an der Schnürstelle relativ genau angepaßt sein müssen, um einen Verschluß zu erzielen, der rutschfest ist, sowohl gegenüber dem bei der Füllung des Behältnisses auftretenden Fülldruck, als auch gegenüber dessen vielfältigen Beanspruchungen bei der Nachbehandlung und beim Transport. Darüberhinaus sind Undichtigkeiten durch Kapillarwirkung nicht vermeidbar.

Aus den gleichen Gründen nachteilig sind auch die bekannten Rastverschlüsse für Beutel, deren Rasten zudem im Hinblick auf die zu übertragenden Kräfte dimensioniert werden mussen, was zwangsläufig zu einer groben Abstufung der Rasten führt, die die gewünschte Rutschfestigkeit und Dichtigkeit zu erzielen erschwert.

Es ist daher die Aufgabe der vorliegenden Erfindung, ein Verschließelement zu schaffen, welches auf einfache Art und Weise maschinell anwendbar ist und dabei einen dichten und rutschfesten Verschluß gewährleistet. Darüberhinaus soll es möglich sein, die in Frage kommenden Schlauchdimensionen mit wenigen Baugrößen zu überbrücken. Schließlich soll das neue Verschließelement sicherstellen, daß eine Beschädigung der Schlauchfolie durch die Anbringung desselben vermieden wird.

Diese Aufgabe wird erfindungsgemäß bei einem Verschließelement nach dem Oberbegriff des Anspruches 1 dadurch gelöst, daß die beiden Formstücke so ausgebildet sind, daß der geraffte Schlauch im Bereich des Verschließelementes in Verschlußstellung über seine gesamte Breite mäanderförmig geführt wird.

Der wesentliche Vorteil dieses Verschlusses resultiert daraus, daß der Schlauch im Verschlußbereich ein Labyrinth durchläuft mit der Wirkung, daß die damit verbundene mäanderförmige Mehrfachumlenkung eine rutschfeste Halterung sowie sichere Abdichtung ergibt. Die Ausbildung des Labyrinthkanals als federelastischer verformbarer Querschnitt bewirkt darüber hinaus den sicheren Erhalt dieser Funktionen auch bei unterschiedlichen Schlauchgrößen. Um die Beschädigung der Schlauchfolie im Bereich des Labyrinthkanals und im Eingangsbereich des Verschließelementes zu verhindern, werden die Kanten und Ecken des Verschließelementes gerundet ausgebildet, vorzugsweise mit Radien versehen.

Weitere vorteilhafte Ausgestaltungen der Erfindung sind den Unteransprüchen entnehmbar.

Ausführungsbeispiele der Erfindung werden nachstehend anhand der Zeichnung näher erläutert.

Es zeigen:

Figur 1 ein erfindungsgemäßes Verschließelement in Explosionsdarstellung und axonometrischer Ansicht widergegeben,

Figur 2 eine Ausführungsvariante des Verschließelementes, ebenfalls axonometrisch dargestellt,

Figur 3 eine Ausführungsvariante des Verschließelementes nach Figur 1 im Längsschnitt dargestellt,

Figur 4 eine Ausführungsvariante des Verschließelementes nach Figur 2 im Längsschnitt dargestellt,

Figur 5 eine weitere Ausführungsvariante des Verschließelementes und

Figur 6 den Endabschnitt einer durch ein Verschließelement abgeschlossenen Wursthülle in Seitenansicht.

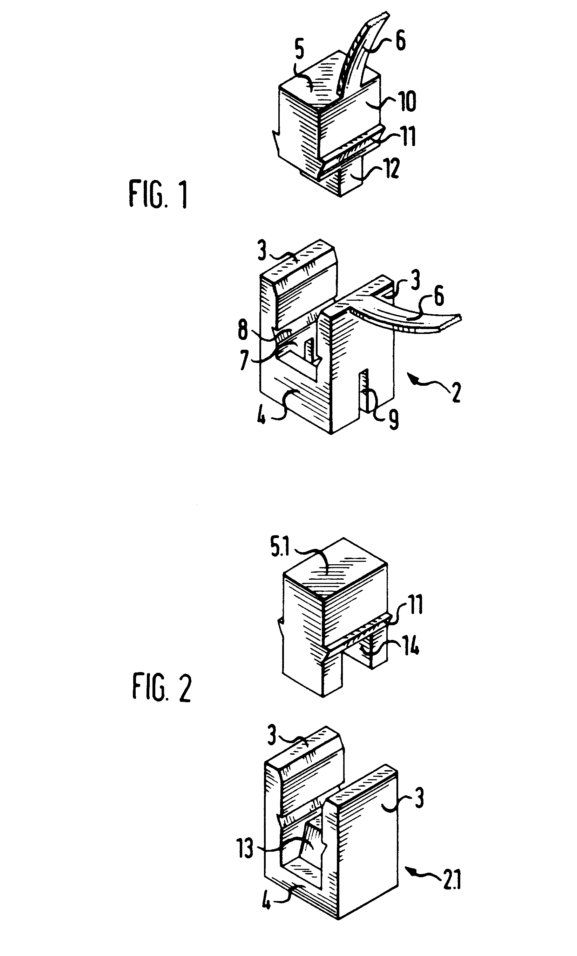

Wie aus Figur 1 ersichtlich, besteht das erfindungsgemäße Verschließelement 1 aus einem u-förmigen ersten Formstück 2 mit zwei Schenkeln 3 und einem diese miteinander verbindenden Stegteil 4 sowie aus einem zweiten Formstück 5, das als Einsatzelement ausgebildet ist und zwischen den U-Schenkeln 3 des ersten Formstücks 2 einrastbar ist. Die beiden Formstücke 2 und 5 sind vorteilhafterweise aus einem thermoplastischen Kunststoff im Spritzgußverfahren gefertigt und können durch eine Verbindungslasche 6 flexibel miteinander verbunden sein. Das erste Formstück 2 weist an seinem Stegteil 4 eine Vertiefung 7 auf, die sich über die gesamte Breite des Stegteils 4 erstreckt und im Längsschnitt die Gestalt eines gleichschenkeligen Trapezes hat. Die Schenkel 3 sind je an ihrer Innenflanke mit einer zur Längsachse des U-Profils parallelen Nut 8 mit sägezahnförmigem Querschnitt versehen, wobei die Sägezahnschulter zum offenen Ende des ersten Formstücks 2 gerichtet ist. Das U-Profil desselben ist schließlich mit einem querverlaufenden und dabei den Stegteil 4 im Bereich der Vertiefung 7 unterbrechenden Entlastungseinschnitt 9 versehen.

Das zweite Formstück 5 ist von im wesentlichen quaderförmiger Gestalt. Dabei entspricht das Breitenmaß dem lichten Abstand der Schenkel 3 des ersten Formstücks 2. Es weisen die dieses Maß bestimmenden Begrenzungsflächen 10 jeweils eine Rastleiste 11 auf, deren Querschnitt dem der Nut 8 entspricht. Das Längenmaß ist gleich dem des ersten Formstücks 2. Von der in Verschlußstellung zu dem Stegteil 4 des letzteren weisenden Stirnfläche ragt ein Quersteg 12 auf, der in Verschlußstellung der beiden Formstücke 2 und 5 in die Vertiefung 7 hineinragt.

Die erfindungsgemäße Ausführungsvariante nach Figur 2 zeigt ein erstes Formstück 2.1 wiederum u-förmiger Gestalt, dessen Stegteil 4 jedoch mit einem die U-Schenkel 3 verbindenden Quersteg 13 mit keilförmigem Querschnitt versehen ist.

Das zugehörige zweite Formstück 5.1 weist dementsprechend an der in Verschlußstellung dem Stegteil 4 zuweisenden Stirnfläche eine Quernut 14 auf, die in Verbundstellung der beiden Formstücke 2.1 und 5.1 den Quersteg 13 übergreift.

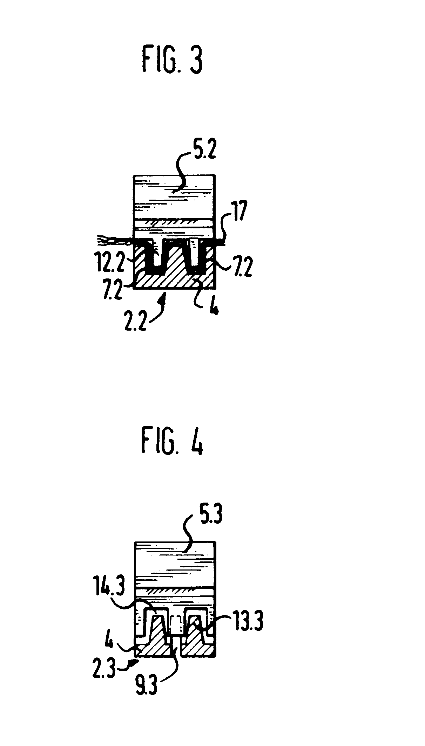

Bei der Ausführung nach Figur 3 ist der Stegteil 4 des ersten Formstücks 2.2 mit zwei sich über die ganze Breite des Stegteils 4 erstreckenden Vertiefungen 7.2 versehen, die durch einen die U-Schenkel 3 verbindenden Mittelsteg 15 keilförmigen Querschnitts getrennt sind. Das zugehörige zweite Formstück 5.2 weist an seiner in Verschlußstellung dem Stegteil 4 des letzteren zuweisenden Stirnfläche dementsprechend zwei parallele Querstege 12.2 auf, die in Verschlußstellung in die Vertiefungen 7.2 hineinragen.

Bei der Ausführung nach Figur 4 ist der Stegteil 4 des ersten Formstücks 2.3 mit zwei die U-Schenkel 3 verbindenden Querstegen 13.3 mit jeweils keilförmigem Querschnitt versehen. Das zugehörige zweite Formstück 5.3 weist dementsprechend an der in Verschlußstellung dem Stegteil 4 zuweisenden Stirnfläche zwei Quernuten 14.3 auf, die in Verschlußstellung der beiden Formstücke 2.3 und 5.3 die Querstege 13.3 übergreifen. Bei dieser Ausführung des Verschließelementes ist das erste Formstück 2.3 mit einem querverlaufenden und dabei den Stegteil 4 im Bereich zwischen den Querstegen 13.3 desselben unterbrechenden Entlastungseinschnitt 9.3 versehen.

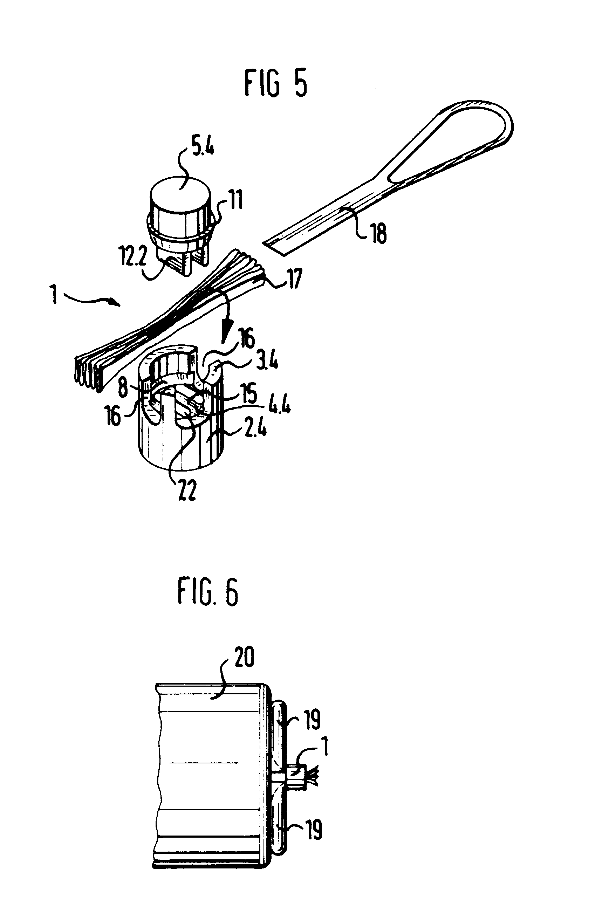

Das Ausführungsbeispiel nach Figur 5 zeigt ein topfförmiges erstes Formstück 2.4, dem ein knopfförmiges zweites Formstück 5.4 zugehört. Der Rand 3.4 des topfförmigen Formstücks 2.4 ist durch zwei einander gegenüberliegende Aussparungen 16 zur Aufnahme des gerafften Schlauches 17 unterbrochen. Im übrigen kann der Bodenteil 4.4 des topfförmigen Formstücks 2.4 sowie das zweite Formstück 5.4 entsprechend den vorstehenden Ausführungsbeispielen gestaltet sein.

Das Ausführungsbeispiel nach Figur 6 zeigt ein geschlossenes Verschließelement 1, wie es beispielhaft anhand der Figuren 1 bis 5 dargestellt ist, wobei die beiden Formstücke 2 und 5 (bzw. 2.X und 5.X) mit jeweils einem etwa halbkreisförmigen Flanschstück 19 versehen sind, die zur Aufnahme der beim Füllen des Schlauches entstehenden Kraft auf die Stirnfläche der Wursthülle 20 vorgesehen sind. Diese, einen zwischen Schließelement 1 und gefülltem Schlauchende 20 einen Teller bildenden Flanschstücke 19 sorgen dafür, daß die spätere Wurst an den Enden abgeflacht und nicht wie sonst üblich gerundet ausgebildet ist.

Die Funktion des erfindungsgemäßen Verschließelementes 1 wird unter Bezug auf die verschiedenen Ausführungsbeispiele wie folgt beschrieben:

Nachdem der zu verschließende Schlauchabschnitt durch Drillen, Fälteln, Quetschen oder Abdrücken gerafft worden ist, wird der entsprechende Bereich zwischen die Schenkel 3 des ersten Formstücks 2, 2.1, 2.2 bzw. 2.3 der Ausführungen nach den Figuren 1 bis 4 bzw. in die Aussparungen 16 desjenigen 2.4 eingelegt. Sodann wird dieses Formstück an seinem Stegteil 4 bzw. Bodenteil 4.4 abgestützt und das jeweils zugehörige Formstück mit seiner stirnfläche voran in das erste Formstück eingeführt. Dabei ist insbesondere bei der Ausführung nach Figur 5 darauf zu achten, daß die Zuordnung derart erfolgt, daß Stege und Vertiefungen der beiden Formstücke passend einander gegenüberstehen. Das Einsetzen erfolgt vorzugsweise mittels einer Presse oder Zange und ist vollendet, wenn die Rastleiste 11 formschlüssig in die Nut 8 einrastet. In dieser Stellung sind die Stege in die Vertiefungen eingetaucht und haben den Schlauch 17 mäanderförmig verformt, was eine hervorragende Rutschsicherheit und Dichtigkeit bewirkt.

Um auch eine einwandfreie Abdichtung und Rutschsicherheit bei unterschiedlichen Schlauchgrößen zu erreichen bzw. eine Vielzahl unterschiedlicher Schlauchgrößen mit nur einer Größenausführung des Verschließelementes dicht verschließen zu können, sind Vorkehrungen getroffen, die zusätzlich ein elastisches Abklemmen des Schlauches 17 bewirken. So ist nach Figur 1 die Vertiefung 7 in dem ersten Formstück 2 in der Längsschnittebene trapezförmig, so daß der durch den Steg 12 des zweiten Formstücks 5 in die Vertiefung 7 gedrängte Schlauch 17 gegen die geneigten Flanken derselben gepreßt wird. Dank des Entlastungseinschnitts 9 können diese dabei je nach Schlauchvolumen mehr oder weniger elastisch ausweichen. Prinzipiell ist diese Wirkungsweise bei allen Ausführungsvarianten vorgesehen.

Zur Erzielung einer besseren Rutschfestigkeit und besonders hoher Dichtigkeit im Bereich des Verschließelementes, wie anhand der Figuren 3 und 4 angedeutet ist, können Verschließelemente mit mehreren, beispielsweise vier, fünf oder noch mehr Querstegen, Vertiefungen und Entlastungseinschnitten vorgesehen sein, die sich dann baugleich, wie die anhand der Figuren 3 und 4 beschriebenen, aneinanderreihen.

Alle Verschließelemente können im Bereich des Labyrinths an den jeweiligen Umlenkstellen mit Radien versehen werden, um ggf. eine Beschädigung der Schlauchfolie zu verhindern, wie dies bei den in Figur 5 dargestellten Querstegen 12.2 angedeutet ist.

Ebenso kann der Eingangsbereich der u-förmigen Verschließelemente (wie in Figur 5 anhand der Aussparung 16 dargestellt) auch bei den Ausführungsformen gemäß den Figuren 1 bis 4 rund, oval oder ähnlich gerundet gestaltet sein, was sich schließlich in den Formstücken 5, 5.1, 5.2 und 5.3 fortsetzen kann. Dadurch weist der im Eingangsbereich des Verschließelements zusammengepreßte Schlauch dann einen mehr oder weniger runden Querschnitt auf. Wenn dann dieser gerundet gestaltete Eingangsbereich auch noch mit Radien versehen ist, so wird einer möglichen Beschädigung der Schlauchfolie durch Knickung oder Biegung beim Transport oder der Lagerung zusätzlich vorgebeugt.

Schließlich kann der Eingangsbereich aus Gründen der Verschnittminimierung beim Wurstzuschnitt (die geschnittenen Wurstscheiben sollten einen möglichst gleich großen Durchmesser haben; bei üblichen Würsten ist dies in den Endbereichen nicht gewährleistet, da eine Wurst in diesem Bereich von ihrer zylindrischen Form zum Verschließelement hin gerundet, in der Regel halbkugelförmig ausgebildet ist, in diesem Halbkugelbereich haben die Wurstscheiben einen kleineren Durchmesser, wodurch Verschnitt auftritt) optimiert werden. Dazu kann der Eingangsbereich am u-förmigen Verschließelement wie auch am einrastenden Formstück so gestaltet werden, daß im geschlossenen Zustand ein kreisförmiger, das eigentliche Verschließelement überragender Flansch 19 entsteht. Die gegen diesen Flansch 19 gepreßte Wurstfüllung bewirkt dann ein sofortiges praktisch senkrechtes Anwachsen des Wurstdurchmessers auf den Schlauchdurchmesser. Der Verschnitt kann hierdurch sehr gering gehalten werden.

Diese Verschnittminimierung kann auch dadurch erzielt werden, daß als Flansch ein scheibenförmiges, den Schlauch umgebendes Teil vor dem Verschließelement (in Richtung auf das Schlauchende gesehen) angeordnet wird, das mit einem radialen Schlitz versehen ist, der vom Außenumfang bis zur Scheibenmitte verläuft. Dieser radiale Schlitz dient zum einfachen Aufschieben der Scheibe auf den gerafften Schlauchbereich. Diese Scheibe nimmt während des Füllens die durch den Fülldruck entstehenden stirnseitigen Kräfte auf.

Mit dem gerafften Schlauch 17 kann ein vorbereiteter Aufhänger 18 eingelegt werden, der vorzugsweise aus einer Folie bestehen kann, so daß die mäanderförmige Verformung eine gute Verankerung desselben bewirkt.

Für eine Mechanisierung des Verschließvorganges kann von Vorteil sein, wenn die ersten und zweiten Formstücke jeweils zu Ketten zusammengefügt werden, was durch geeignete Laschenverbindungen geschehen kann, die jeweils nach dem Ineinanderfügen der beiden Formstücke vorzugsweise mit dem Schließhub getrennt werden.

Für eine weitere Automatisierung des Verschließvorganges kann es von Vorteil sein, wenn die ersten und die zweiten Formstücke zusätzlich zu der vorgenannten Kettenbildung auch in Schlauchrichtung gesehen paarweise miteinander verbunden werden, was ebenfalls durch geeignete Laschen oder Stegverbindungen geschehen kann. Hierdurch kann mit einem Schließhub gleichzeitig ein Verschließelement für ein Wurstende und ein Verschließelement für einen Wurstanfang gesetzt und geschlossen werden.

Zur unlösbaren Verbindung der beiden Formstücke miteinander können die beiden Teile nach dem Ineinanderfügen verschweißt oder versiegelt werden, was mit einem erhitzten Stempel erfolgen kann, mit dessen Hilfe auch das Packdatum eingeprägt werden kann.

## Patentansprüche

1. Verschließelement für einen Schlauch, insbesondere für eine Wursthülle, umfassend ein erstes und ein zweites Formstück, welche in Verschlußstellung unter Abklemmen eines radial gerafften Bereiches des Schlauchs formschlüssig rastend ineinander fügbar sind, dadurch gekennzeichnet, daß die beiden Formstücke (2 und 5) so ausgebildet sind, daß der geraffte Schlauch im Bereich des Verschließelementes in Verschlußstellung über seine gesamte Breite mäanderförmig geführt wird.

2. Verschließelement nach Anspruch 1, dadurch gekennzeichnet, daß die mäanderförmige Führung in einem Labyrinthkanal erfolgt, dessen Querschnitt federelastisch verformbar ist.

3. Verschließelement nach Anspruch 1 oder 2, dadurch gekennzeichnet, daß der Layrinthkanal entgegen Federkraft ausweichbare Verformelemente aufweist.

4. Verschließelement nach einem der vorhergehenden Ansprüche, dadurch gekennzeichnet, daß das erste Formstück (2) von u-förmiger Gestalt mit zwei Schenkeln (3) und einem diese verbindenden Stegteil (4) ausgebildet ist, wobei der Stegteil (4) als ein Verformelement eine sich über die gesamte Breite desselben erstreckende Vertiefung (7) aufweist, und daß das zweite Formstück (5) als zwischen den U-Schenkeln (3) des ersten Formstücks (2) einpassbares Einsatzelement ausgebildet ist, welches an seiner dem Stegteil (4) des ersten Formstücks (2) zuweisenden Stirnseite mit einem in die Vertiefung (7) hineinragenden Quersteg (12) versehen ist.

5. Verschließelement nach einem der vorhergehenden Ansprüche, dadurch gekennzeichnet, daß das ersten Formstück (2) mit einem der u-förmigen Querschnitt durchsetzenden, mindestens den Stegteil (4) desselben im Bereich der Vertiefung (7) unterbrechenden Entlastungseinschnitt (9) versehen ist.

6. Verschließelement nach einem der vorhergehenden Ansprüche, dadurch gekennzeichnet, daß die Vertiefung (7) in dem Stegteil (4) des ersten Formstücks (2) im Längsschnitt die Gestalt eines gleichschenkeligen Trapezes aufweist.

7. Verschließelement nach einem der vorhergehenden Ansprüche, dadurch gekennzeichnet, daß der Stegteil (4) des ersten Formstücks (2.2) zwei sich über die gesamte Breite des Stegteils (4) erstreckende Vertiefungen (7.2) aufweist, die durch einen die U-Schenkel (3) verbindenden Mittelsteg (15) getrennt sind, und daß das zugehörige zweite Formstück (5.2) an seiner dem Stegteil (4) des ersten Formstücks (2.3) zuweisenden Stirnfläche mit zwei im wesentlichen parallelen, in Verschlußstellung in die Vertiefungen (7.2) hineinragenden Querstegen (12.2) versehen ist.

8. Verschließelement nach einem der vorhergehenden Ansprüche, dadurch gekennzeichnet, daß der die Vertiefungen (7.2) in dem ersten Formstück (2.2) trennende Mittelsteg (15) im Querschnitt keilförmig ist und die Querstege (12.2) des zugehörigen zweiten Formstücks (5.2) einen lichten Abstand aufweisen, der im wesentlichen der mittleren Breite des Mittelstegs (15) entspricht.

9. Verschließelement nach einem der vorhergehenden Ansprüche, dadurch gekennzeichnet, daß das erste Formstück (2.1) von u-förmiger Gestalt ist, wobei dessen Stegteil (4) mit einem die U-Schenkel (3) verbindenden Quersteg (13) versehen ist, und daß das zweite Formstück (5.1) als zwischen den U-Schenkeln (3) des ersten Formstücks (2.1) einpassbares Einsatzelement ausgebildet ist, welches an seiner im Stegteil (4) des ersten Formstücks (2.1) zuweisenden Stirnseite mit einer Quernut (14) versehen ist.

10. Verschließelement nach einem der vorhergehenden Ansprüche, dadurch gekennzeichnet, daß das Stegteil (4) des ersten Formstücks (2.3) mit zwei die U-Schenkel (3) verbindenden Querstegen (13.3) versehen ist, und daß das zugehörige zweite Formstück (5.3) an seiner dem Stegteil (4) des ersten Formstücks (2.3) zuweisenden Stirnfläche mit zwei Quernuten (14.3) versehen ist, in die die Querstege (13.3) in Verschlußstellung hineinragen.

11. Verschließelement nach einem der vorhergehenden Ansprüche, dadurch gekennzeichnet, daß die Querstege (13.3) des ersten Formstücks (2.3) im Querschnitt keilförmig sind und die Quernuten (14.3) in dem zugehörigen zweiten Formstück (5.3) ein Breitenmaß aufweisen, das der mittleren Breite der Querstege (13.3) im wesentlichen entspricht.

12. Verschließelement nach einem der vorhergehenden Ansprüche, dadurch gekennzeichnet, daß das erste Formstück (2.3) mit einem den u-förmigen Querschnitt durchsetzenden, mindestens den Stegteil (4) im Bereich zwischen den Querstegen (13.3) desselben unterbrechenden Entlastungseinschnitt (9.3) versehen ist.

13. Verschließelement nach einem der vorhergehenden Ansprüche, dadurch gekennzeichnet, daß es aus einem federelastischen Werkstoff, vorzugsweise aus einem thermoplastischen, unter Sterilisationsbelastung dauerfesten Kunststoff besteht.

14. Verschließelement nach einem der vorhergehenden Ansprüche, dadurch gekennzeichnet, daß die Querstege (12.2) des zweiten Formstücks (5.2) bzw. diejenigen (13.3) des ersten Formstücks (2.3) zur gegenseitigen Abstandsvergrößerung oder Abstandsverkleinerung federelastisch verformbar, spreizbar oder zusammenbiegbar sind.

15. Verschließelement nach einem der vorhergehenden Ansprüche, dadurch gekennzeichnet, daß mindestens eines jeweils zweier zugehöriger Formstücke mit einem integrierten Aufhänger versehen ist.

16. Verschließelement nach einem der vorhergehenden Ansprüche, dadurch gekennzeichnet, daß vor dem Ineinanderfügen zwei einander zugehöriger Formstücke mit dem gerafften Bereich des Schlauches ein vorbereiteter Aufhänger (18) eingelegt wird.

17. Verschließelement nach einem der vorhergehenden Ansprüche, dadurch gekennzeichnet, daß die beiden jeweils einander zugehörigen Formstücke des Verschließelements nach dem Ineinanderfügen miteinander durch Schweißen oder Siegeln unlösbar verbunden werden.

18. Verschließelement nach einem der vorhergehenden Ansprüche, dadurch gekennzeichnet, daß mindestens eines der zueinander gehörigen Formstücke als Datenträger, beispielsweise zur Fixierung des Verschlußdatums vorgesehen ist.

19. Verschließelement nach einem der vorhergehenden Ansprüche, dadurch gekennzeichnet, daß die jeweils zueinander gehörigen Formstücke durch eine Verbindungslasche (6) flexibel verbunden sind.

20. Verschließelement nach einem der vorhergehenden Ansprüche, dadurch gekennzeichnet, daß jeweils mehrere gleichartige erste Formstücke bzw. zweite Formstücke quer zur Schlauchrichtung eine Kette bildend aneinandergefügt sind.

21. Verschließelement nach einem der vorhergehenden Ansprüche, dadurch gekennzeichnet, daß jeweils zwei gleichartige Formstücke (2 bzw. 5) in Schlauchrichtung miteinander verbunden sind.

22. Verschließelement nach einem der vorhergehenden Ansprüche, dadurch gekennzeichnet, daß jeweils zwei gleichartige Formstücke sowohl in Schlauchrichtung als auch mehrere Formstückpaare quer zur Schlauchrichtung miteinander verbunden sind.

23. Verschließelement nach einem der vorhergehenden Ansprüche, dadurch gekennzeichnet, daß die Formstücke im Bereich des Labyrinths, insbesondere an den jeweiligen Umlenkstellen, mit Radien versehen sind.

24. Verschließelement nach einem der vorhergehenden Ansprüche, dadurch gekennzeichnet, daß der Schlaucheingangsbereich rund, oval oder gerundet gestaltet ist.

25. Verschließelement nach einem der vorhergehenden Ansprüche, dadurch gekennzeichnet, daß die beiden Formstücke im Schlaucheingangsbereich mit jeweils einem halbkreisförmigen Flanschstück (19) versehen sind.

26. Verschließelement nach einem der vorhergehenden Ansprüche, dadurch gekennzeichnet, daß der Flansch im Bereich zwischen Schlauch und Verschließelement durch eine Scheibe gebildet ist, welche einen radialen Einschnitt zum Aufschieben auf einen gerafften Schlauchbereich aufweist.

27. Verschließelement nach einem der vorhergehenden Ansprüche, dadurch gekennzeichnet, daß der Schlaucheingangsbereich einen umlaufenden Radius aufweist, der sich bis auf den Flanschaußendurchmesser erstreckt.

FIG. 1

FIG. 2

FIG. 3

FIG. 4

EP 0 481 235 A1

FIG 5

5.4
11
12.2
1
17
18
16
3.4
8
15
16
4.4
2.4
22

FIG. 6

20
19
1
19

9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-B-1 023 693   (KLEIN-SOETEBIER) | 1-3,7,8, 13-16,23, 24 | A 22 C 11/12 |
| A | (* das ganze Dokument *) | 4,9-11 | |
| | − − − | | |
| X | DE-C-932 651   (RUDOLPH) | 1,13,16, | |
| | * Seite 2, Zeile 44 - Zeile 116 * * | 18 | |
| | − − − | | |
| D,A | DE-C-964 570   (KLEIN-SOETEBIER) | | |
| | − − − | | |
| A | DE-C-811 444   (KRAEMER) | | |
| | − − − | | |
| A | CH-A-279 271   (HOCHNETZ) | | |
| | − − − | | |
| A | US-A-2 670 294   (FRANK) | | |
| | − − − − − | | |

| RECHERCHIERTE SACHGEBIETE (Int. Cl.5) |
|---|
| A 22 C |
| B 65 D |

**Der vorliegende Recherchenbericht wurde für alle Patentansprüche erstellt**

| Recherchenort | Abschlußdatum der Recherche | Prüfer |
|---|---|---|
| Den Haag | 29 Januar 92 | DE LAMEILLIEURE D. |